# EUROPEAN PATENT SPECIFICATION

(11) **EP 3 427 401 B1**
(45) Date of publication and mention of the grant of the patent: **06.01.2021**
(21) Application number: 17712618.2
(22) Date of filing: 08.03.2017
(51) Int. Cl.: H04B 7/06, H04B 7/04, H04B 7/08, H04B 7/0456, H04W 72/04

(54) **CONCURRENT MIMO BEAMFORMING TRAINING IN MMW WLAN SYSTEMS**
TRAINING VON GLEICHZEITIGER MIMO-STRAHLFORMUNG IN MMW-WLAN-SYSTEMEN
APPRENTISSAGE DE FORMATION DE FAISCEAU MIMO CONCURRENT DANS DES SYSTÈMES WLAN MMW

(30) Priority: 10.03.2016 US 201662306422 P; 12.05.2016 US 201662335127 P
(43) Date of publication of application: 16.01.2019
(73) Proprietor: Interdigital Patent Holdings, Inc., Wilmington, DE 19809 (US)
(72) Inventor: LOU, Hanqing, Melville, New York 11747-4508 (US); OTERI, Oghenekome, San Diego, California 92121-1878 (US); SAHIN, Alphan, Melville, New York 11747-4508 (US)
(74) Representative: AWA Sweden AB
(86) International application number: PCT/US2017/021341
(87) International publication number: WO 2017/156114

(56) References cited:
- US-A1- 2013 156 120
- US-A1- 2013 156 120
- US-A1- 2013 272 263
- US-A1- 2013 272 263
- US-A1- 2014 044 044
- US-A1- 2014 044 044
- US-A1- 2015 289 147
- US-A1- 2015 289 147

## Description

### CROSS-REFERENCE TO RELATED APPLICATIONS

This application claims priority to U.S. provisional patent application no. 62/306,422, filed March 10, 2016, and U.S. provisional patent application no. 62/335,127, filed May 12, 2016.

### BACKGROUND

A Wireless Local Area Network (WLAN) may have multiple modes of operation, such as an Infrastructure Basic Service Set (BSS) mode and an Independent BSS (IBSS) mode. A WLAN in Infrastructure BSS mode may have an Access Point (AP) for the BSS. One or more wireless transmit receive units (WTRUs), *e.g*., stations (STAs), may be associated with an AP. An AP may have access or an interface to a Distribution System (DS) or other type of wired/wireless network that carries traffic in and out of a BSS. Traffic to STAs that originates from outside a BSS may arrive through an AP, which may deliver the traffic to the STAs. In certain WLAN systems STA to STA communication may take place. In certain WLAN systems an AP may act in the role of a STA. Beamforming may be used by WLAN devices. Current beamforming techniques may be limited.

Prior art documents US 2014/0044044 A1, US 2013/0272263 A1, US 2015/0289147 A1, and US 2013/0156120 A1 disclose relevant beamforming / beam selection techniques, and corresponding channel sounding methods.

### SUMMARY

Systems, methods, and instrumentalities are disclosed for concurrent multiple input multiple output (MIMO) beamforming training. A first station (STA) may send a training announcement frame to a second STA. The first STA may be an access point (AP) STA. The training announcement frame may indicate a training period and/or a concurrent transmit and receive training. The first STA may send training frames in a plurality of time slots of the training period. The first STA may send a first set of training frames to the second STA. The first set of training frames may include one (*e.g*., only one) training frame. The first STA may send the first set of training frames via a first set of transmit beams. The first STA may send the first set of training frames in a first time slot of the training period. The first STA may send a second set of training frames in a second time slot of the training period. The second set of training frames may include one (*e.g.,* only one) training frame. The first STA may send the first and second set of training frames to one or more other STAs.

The first STA may receive feedback from the second STA. The feedback may be associated with one or more transmit beams of the first and second set of transmit beams. The feedback may include one or more of channel state information (CSI), one or more beam identifications (IDs), or a down selection request. The one or more beam IDs may be associated with one or more best beams selected by the second STA. The feedback may be received during a feedback period. The feedback period may follow the training period.

The first STA may perform a down selection training, for example, when the feedback includes the down selection request. The down selection training may be performed during the down selection training period. The down selection training may include sending a set of down selection training frames via a down-selected set of transmit beams. The down-selected set of transmit beams may be a subset of the first set and second set of transmit beams. The down-selected set of transmit beams may be determined based on the received feedback. The down-selected set of transmit beams may be determined based on one or more of beam combinations used in the training period or the one or more beam IDs indicated in the received feedback. The first and second set of training frames may be sent, the feedback may be received, and the down selection training may be performed in a training transmit opportunity (TXOP).

The first STA may send one or more acknowledgment (ACK) frames to the second STA, for example, in response to the received feedback. The first STA may send a down selection indication to the second STA. The down selection indication may indicate a need to perform down selection. The down selection indication may be included in an ACK frame of the one or more ACK frames. The down selection indication may be a MIMO beamforming request indication.

The invention is defined by the appended independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

### BRIEF DESCRIPTION OF THE DRAWINGS

FIG. 1A illustrates exemplary wireless local area network (WLAN) devices.
FIG. 1B is a diagram of an example communications system in which one or more disclosed features may be implemented.
FIG. 1C depicts an exemplary wireless transmit/receive unit, WTRU.
FIG. 2 is an exemplary sector level sweep (SLS) training.
FIG. 3 is an exemplary sector sweep (SSW) frame.
FIG. 4 is an exemplary SSW field.
FIG. 5 is an exemplary initiator sector sweep (ISS) SSW feedback field.
FIG. 6 is an exemplary SSW feedback field that does not use ISS.
FIG. 7 is an exemplary physical layer convergence protocol (PLCP) protocol data unit (PPDU).
FIG. 8 is an exemplary station (STA) beam pattern.
FIG. 9 is an exemplary multiple input multiple output (MIMO) beamforming training.
FIG. 10 is an exemplary antenna pattern for a multi-transmitter/receiver training.
FIG. 11 is an exemplary peer to peer (P2P) cascaded training transmission opportunity (TXOP).

### DETAILED DESCRIPTION

A detailed description of illustrative embodiments will now be described with reference to the various Figures. Although this description provides a detailed example of possible implementations, it should be noted that the details are intended to be exemplary and in no way limit the scope of the application.

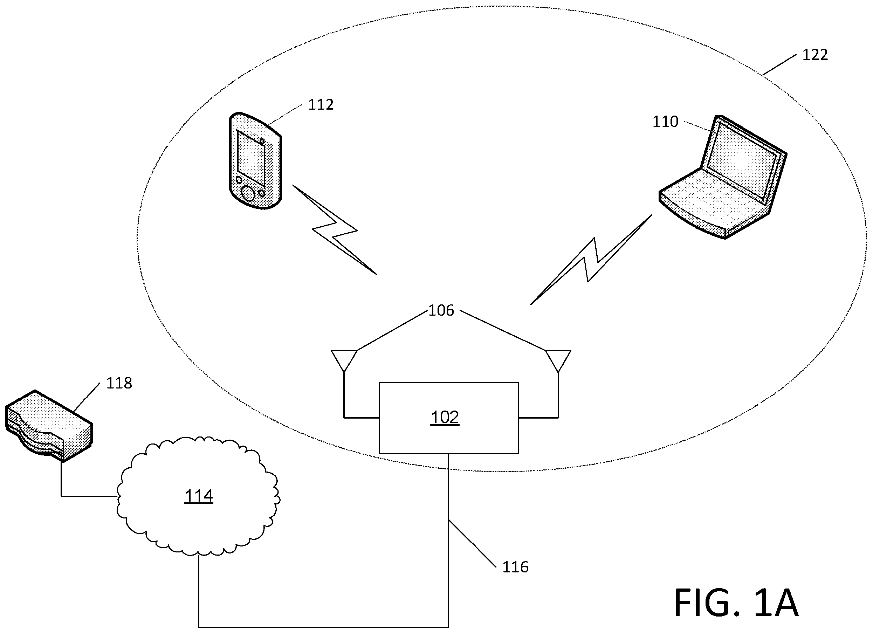

FIG. 1A illustrates exemplary wireless local area network (WLAN) devices. One or more of the devices may be used to implement one or more of the features described herein. The WLAN may include, but is not limited to, access point (AP) 102, station (STA) 110, and STA 112. STA 110 and 112 may be associated with AP 102. The WLAN may be configured to implement one or more protocols of the IEEE 802.11 communication standard, which may include a channel access scheme, such as DSSS, OFDM, OFDMA, etc. A WLAN may operate in a mode, *e.g.*, an infrastructure mode, an ad-hoc mode, etc.

A WLAN operating in an infrastructure mode may comprise one or more APs communicating with one or more associated STAs. An AP and STA(s) associated with the AP may comprise a basic service set (BSS). For example, AP 102, STA 110, and STA 112 may comprise BSS 122. An extended service set (ESS) may comprise one or more APs (with one or more BSSs) and STA(s) associated with the APs. An AP may have access to, and/or interface to, distribution system (DS) 116, which may be wired and/or wireless and may carry traffic to and/or from the AP. Traffic to a STA in the WLAN originating from outside the WLAN may be received at an AP in the WLAN, which may send the traffic to the STA in the WLAN. Traffic originating from a STA in the WLAN to a destination outside the WLAN, *e.g.,* to server 118, may be sent to an AP in the WLAN, which may send the traffic to the destination, *e.g.,* via DS 116 to network 114 to be sent to server 118. Traffic between STAs within the WLAN may be sent through one or more APs. For example, a source STA (*e.g.,* STA 110) may have traffic intended for a destination STA (*e.g.,* STA 112). STA 110 may send the traffic to AP 102, and, AP 102 may send the traffic to STA 112.

A WLAN may operate in an ad-hoc mode. The ad-hoc mode WLAN may be referred to as independent basic service set (IBBS). In an ad-hoc mode WLAN, the STAs may communicate directly with each other (*e.g.,* STA 110 may communicate with STA 112 without such communication being routed through an AP).

IEEE 802.11 devices (*e.g.,* IEEE 802.11 APs in a BSS) may use beacon frames to announce the existence of a WLAN network. An AP, such as AP 102, may transmit a beacon on a channel, *e.g.,* a fixed channel, such as a primary channel. A STA may use a channel, such as the primary channel, to establish a connection with an AP.

STA(s) and/or AP(s) may use a Carrier Sense Multiple Access with Collision Avoidance (CSMA/CA) channel access mechanism. In CSMA/CA a STA and/or an AP may sense the primary channel. For example, if a STA has data to send, the STA may sense the primary channel. If the primary channel is detected to be busy, the STA may back off. For example, a WLAN or portion thereof may be configured so that one STA may transmit at a given time, *e.g.,* in a given BSS. Channel access may include RTS and/or CTS signaling. For example, an exchange of a request to send (RTS) frame may be transmitted by a sending device and a clear to send (CTS) frame that may be sent by a receiving device. For example, if an AP has data to send to a STA, the AP may send an RTS frame to the STA. If the STA is ready to receive data, the STA may respond with a CTS frame. The CTS frame may include a time value that may alert other STAs to hold off from accessing the medium while the AP initiating the RTS may transmit its data. On receiving the CTS frame from the STA, the AP may send the data to the STA.

A device may reserve spectrum via a network allocation vector (NAV) field. For example, in an IEEE 802.11 frame, the NAV field may be used to reserve a channel for a time period. A STA that wants to transmit data may set the NAV to the time for which it may expect to use the channel. When a STA sets the NAV, the NAV may be set for an associated WLAN or subset thereof (*e.g.,* a BSS). Other STAs may count down the NAV to zero. When the counter reaches a value of zero, the NAV functionality may indicate to the other STA that the channel is now available.

The devices in a WLAN, such as an AP or STA, may include one or more of the following: a processor, a memory, a radio receiver and/or transmitter (*e.g.,* which may be combined in a transceiver), one or more antennas (*e.g.,* antennas 106 in FIG. 1A), etc. A processor function may comprise one or more processors. For example, the processor may comprise one or more of: a general purpose processor, a special purpose processor (*e.g.,* a baseband processor, a MAC processor, etc.), a digital signal processor (DSP), Application Specific Integrated Circuits (ASICs), Field Programmable Gate Array (FPGAs) circuits, any other type of integrated circuit (IC), a state machine, and the like. The one or more processors may be integrated or not integrated with each other. The processor (*e.g.,* the one or more processors or a subset thereof) may be integrated with one or more other functions (*e.g.,* other functions such as memory). The processor may perform signal coding, data processing, power control, input/output processing, modulation, demodulation, and/or any other functionality that may enable the device to operate in a wireless environment, such as the WLAN of FIG. 1A. The processor may be configured to execute processor executable code (*e.g.,* instructions) including, for example, software and/or firmware instructions. For example, the processer may be configured to execute computer readable instructions included on one or more of the processor (*e.g.,* a chipset that includes memory and a processor) or memory. Execution of the instructions may cause the device to perform one or more of the functions described herein.

A device may include one or more antennas. The device may employ multiple input multiple output (MIMO) techniques. The one or more antennas may receive a radio signal. The processor may receive the radio signal, *e.g.,* via the one or more antennas. The one or more antennas may transmit a radio signal (*e.g.,* based on a signal sent from the processor).

The device may have a memory that may include one or more devices for storing programming and/or data, such as processor executable code or instructions (*e.g.,* software, firmware, etc.), electronic data, databases, or other digital information. The memory may include one or more memory units. One or more memory units may be integrated with one or more other functions (*e.g.,* other functions included in the device, such as the processor). The memory may include a read-only memory (ROM) (*e.g.,* erasable programmable read only memory (EPROM), electrically erasable programmable read only memory (EEPROM), etc.), random access memory (RAM), magnetic disk storage media, optical storage media, flash memory devices, and/or other non-transitory computer-readable media for storing information. The memory may be coupled to the processer. The processer may communicate with one or more entities of memory, *e.g.,* via a system bus, directly, etc.

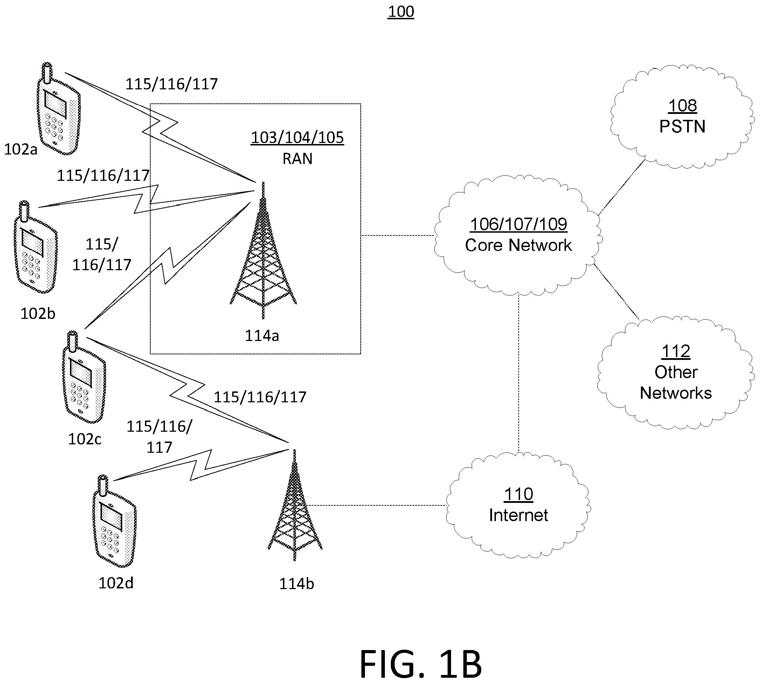

FIG. 1B is a diagram of an example communications system 100 in which one or more disclosed features may be implemented. For example, a wireless network (*e.g.,* a wireless network comprising one or more components of the communications system 100) may be configured such that bearers that extend beyond the wireless network (*e.g.,* beyond a walled garden associated with the wireless network) may be assigned quality of service (QoS) characteristics.

The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1B, the communications system 100 may include at least one wireless transmit/receive unit (WTRU), such as a plurality of WTRUs, for instance WTRUs 102a, 102b, 102c, and 102d, a radio access network (RAN) 104, a core network 106, a public switched telephone network (PSTN) 108, the Internet 110, and other networks 112, though it should be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station (e.g., a WLAN STA), a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it should be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (*e.g.,* radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 IX, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1B may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (*e.g.,* WCDMA, CDMA2000, GSM, LTE, LTE-A, etc.) to establish a picocell or femtocell. As shown in FIG. 1B, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1B, it should be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1B may be configured to communicate with the base station 114a, which may employ a cellular-based radio technology, and with the base station 114b, which may employ an IEEE 802 radio technology.

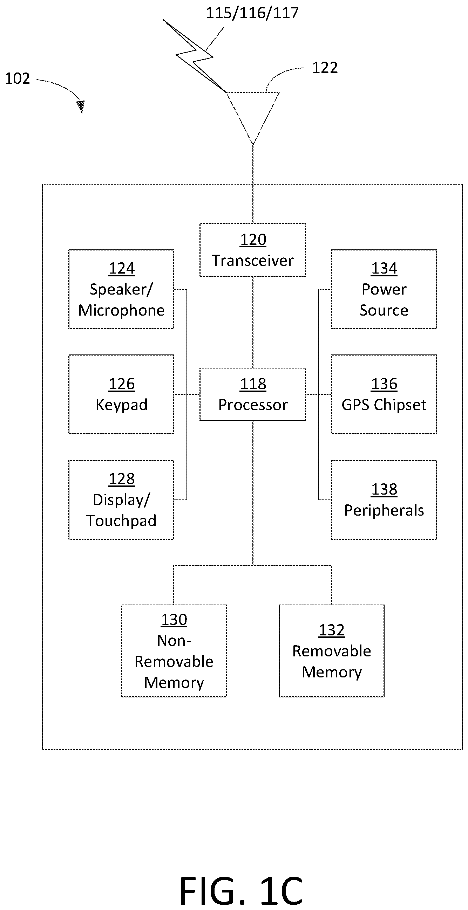

FIG. 1C depicts an exemplary wireless transmit/receive unit, WTRU 102. A WTRU may be a user equipment (UE), a mobile station, a WLAN STA, a fixed or mobile subscriber unit, a pager, a cellular telephone, a personal digital assistant (PDA), a smartphone, a laptop, a netbook, a personal computer, a wireless sensor, consumer electronics, and the like. WTRU 102 may be used in one or more of the communications systems described herein. As shown in FIG. 1C, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It should be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1C depicts the processor 118 and the transceiver 120 as separate components, it should be appreciated that the processor 118 and the transceiver 120 may be integrated together in an electronic package or chip.

The transmit/receive element 122 may be configured to transmit signals to, or receive signals from, a base station (*e.g.,* the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It should be appreciated that the transmit/receive element 122 may be configured to transmit and/or receive any combination of wireless signals.

In addition, although the transmit/receive element 122 is depicted in FIG. 1C as a single element, the WTRU 102 may include any number of transmit/receive elements 122. More specifically, the WTRU 102 may employ MIMO technology. Thus, in one embodiment, the WTRU 102 may include two or more transmit/receive elements 122 (*e.g.,* multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (*e.g.,* a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (*e.g*., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (*e.g*., longitude and latitude) regarding the current location of the WTRU 102. In addition to, or in lieu of, the information from the GPS chipset 136, the WTRU 102 may receive location information over the air interface 116 from a base station (*e.g*., base stations 114a, 114b) and/or determine its location based on the timing of the signals being received from two or more nearby base stations. It should be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

A WLAN may have an Infrastructure Basic Service Set (BSS) mode that may have an Access Point (AP/PCP) for the BSS and one or more stations (STAs) associated with the AP/PCP. The AP/PCP may have an access or interface to a Distribution System (DS) or another type of wired/wireless network that may carry traffic in and out of the BSS. Traffic to STAs that may originate from outside the BSS may arrive through the AP/PCP and may be delivered to the STAs. Traffic that may originate from STAs to destinations outside the BSS may be sent to the AP/PCP and may be delivered to the respective destinations. Traffic between STAs within the BSS may also be sent through the AP/PCP. The source STA may send traffic to the AP/PCP, and the AP/PCP may deliver the traffic to the destination STA. Traffic between STAs within a BSS may be peer-to-peer traffic. Peer-to-peer traffic may be sent between the source and destination STAs with a direct link setup (DLS) using an 802.11e DLS or an 802.11z tunneled DLS (TDLS) and may be sent directly. A WLAN may use an Independent BSS (IBSS) mode and may have no AP/PCP, and/or STAs, and may communicate directly with another WLAN. This mode of communication may be referred to as an "ad-hoc" mode of communication.

The AP/PCP may use the 802.11ac infrastructure mode of operation. The AP/PCP may transmit a beacon and may do so on a fixed channel. The fixed channel may be the primary channel. The channel may be 20 MHz wide and may be the operating channel of the BSS. The channel may be used by the STAs and may be used to establish a connection with the AP/PCP. The fundamental channel access mechanism in an 802.11 system may be Carrier Sense Multiple Access with Collision Avoidance (CSMA/CA). In CSMA/CA, a STA (*e.g*., every STA), including the AP/PCP, may sense the primary channel. The channel may be detected to be busy. The STA may back off and may back off if the channel is detected to be busy. One STA may transmit at any given time in a given BSS (*e.g*., using CSMA/CA).

In 802.1In, High Throughput (HT) STAs may also use a 40 MHz wide channel for communication. This may be achieved by combining the primary 20 MHz channel, with an adjacent 20 MHz channel to form a 40 MHz wide contiguous channel.

In 802.11ac, Very High Throughput (VHT) STAs may support 20MHz, 40 MHz, 80 MHz, and 160 MHz wide channels. The 40 MHz and 80 MHz, channels may be formed by combining contiguous 20 MHz channels similar to 802.1In described above. A160 MHz channel may be formed by combining 8 contiguous 20 MHz channels or by combining two non-contiguous 80 MHz channels. This may be referred to as an 80+80 configuration. For the 80+80 configuration, the data may be channel encoded and may be passed through a segment parser (*e.g.,* after channel encoding). The segment sparser may divide the data into streams (*e.g.,* two streams). IFFT and/or time domain processing may be done on a stream (*e.g*., on each stream separately). The streams may be mapped on to a channel (*e.g.,* each stream to a channel, *e.g.,* two streams to two channels). The data may be transmitted. At the receiver, the mechanism may be reversed, and the combined data may be sent to the MAC.

Sub 1 GHz modes of operation are supported by 802.11af and 802.11ah. For these specifications the channel operating bandwidths, and carriers, are reduced relative to those used in 802.11n and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. A possible use case for 802.11ah is support for Meter Type Control (MTC) devices in a macro coverage area. MTC devices may have limited capabilities including support for limited bandwidths. MTC devices may include a requirement for a long battery life.

WLAN systems which support multiple channels, and channel widths, such as 802.1In, 802.11ac, 802.11af, and 802.11ah, include a channel which is designated as the primary channel. The primary channel may have a bandwidth equal to or about equal to the largest common operating bandwidth supported by the STAs (*e.g.,* all STAs) in the BSS. The bandwidth of the primary channel may be limited by the STA (*e.g.,* of all STAs operating in the BSS) and may be limited by the STA which supports the smallest bandwidth operating mode. In the example of 802.11ah, the primary channel may be 1 MHz wide if there are STAs (*e.g*., MTC type devices) that support (*e.g.,* only support) a 1 MHz mode (*e.g.,* even if the AP/PCP, and other STAs in the BSS, may support a 2 MHz, 4 MHz, 8 MHz, 16 MHz, or other channel bandwidth operating modes). Carrier sensing and NAV settings may depend on the status of the primary channel (*e.g.,* if the primary channel is busy, *e.g.,* due to a STA supporting only a 1 MHz operating mode transmitting to the AP/PCP, then the available frequency bands (*e.g*., entire available frequency bands) are considered busy even though the frequency bands (*e.g*., majority of frequency bands) are idle and available).

In the United States, the available frequency bands which may be used by 802.11ah are from 902 MHz to 928 MHz. In Korea the available frequency bands which may be used are from 917.5 MHz to 923.5 MHz; and in Japan, the available frequency bands which may be used are from 916.5 MHz to 927.5 MHz. The total bandwidth available for 802.11ah is 6 MHz to 26 MHz depending on the country code.

802.11ac has the concept of downlink Multi-User MIMO (MU-MIMO) transmission to multiple STA's in the same symbol's time frame, *e.g.,* during a downlink OFDM symbol. Downlink MU-MIMO may be used in 802.11ah. Downlink MU-MIMO, (*e.g.,* as it is used in 802.11ac), may use the same symbol timing to multiple STA's. Interference of the waveform transmissions to multiple STA's may not be an issue. STA's involved in MU-MIMO transmission (*e.g.,* all the STA's) with the AP/PCP may (*e.g.,* must) use the same channel or band. The operating bandwidth may be the smallest channel bandwidth that is supported by the STA's which are included in the MU-MIMO transmission with the AP/PCP.

802.11ad is an amendment to the WLAN standard, which specifies the MAC and PHY layers for very high throughput (VHT) in the 60GHz band. 802.11ad may support data rates up to 7 Gbits/s. 802.11ad may support three different modulation modes (*e.g*., control PHY with single carrier and spread spectrum, single carrier PHY, and OFDM PHY). 802.11ad may use a 60GHz unlicensed band and/or a band that is available globally. At 60GHz, the wavelength is 5mm. Compact and antenna or antenna arrays may be used with 60GHz. An antenna may create narrow RF beams (*e.g*., at both transmitter and receiver). The narrow RF beams may effectively increase the coverage range and may reduce the interference. The frame structure of 802.11ad may facilitate a mechanism for beamforming (BF) training (*e.g*., discovery and tracking). The beamforming training protocol may comprise two components: a sector level sweep (SLS) procedure and a beam refinement protocol (BRP) procedure. The SLS procedure may be used for transmit beamforming training. The BRP procedure may enable receive beamforming training and may refine (*e.g*., iteratively) the transmit and/or receive beams. MIMO transmissions (*e.g*., single user MIMO (SU-MIMO) and MU-MIMO) may not be supported by 802.11ad.

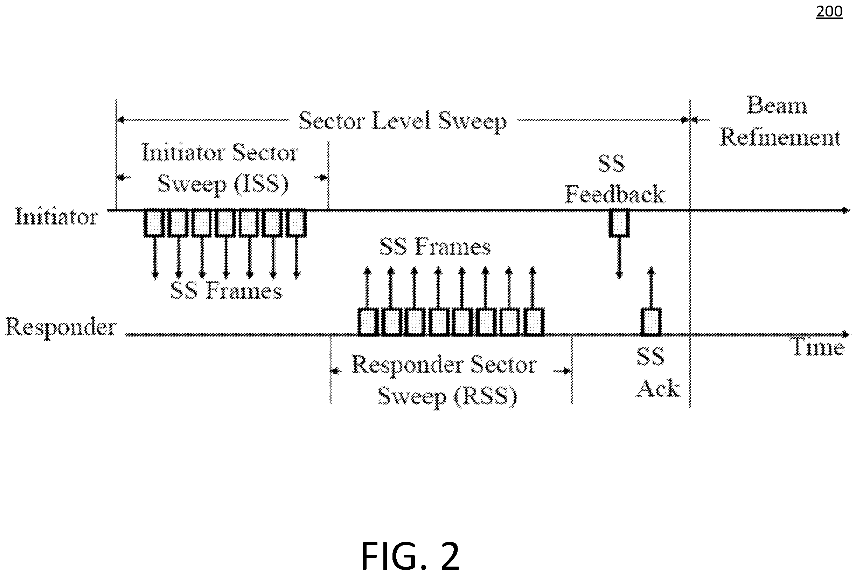

FIG. 2 depicts an exemplary sector level sweep (SLS) training 200. An SLS training 200 may be performed using a beacon frame or a sector sweep (SSW) frame. When a beacon frame is utilized, the AP/PCP may repeat the beacon frame with multiple beams and/or sectors within each beacon interval (BI). When a beacon frame is utilized, multiple STAs may perform BF training simultaneously. The AP/PCP may not be able to sweep all the sectors and/or beams within one BI (*e.g.,* due to the size of the Beacon frame). A STA may wait one or more BIs (*e.g.,* multiple BIs) to complete an initiator sector sweep (ISS) training. When the STA waits multiple BIs to complete an ISS training, latency may be an issue. An SSW frame may be utilized (*e.g.,* for point to point BF training).

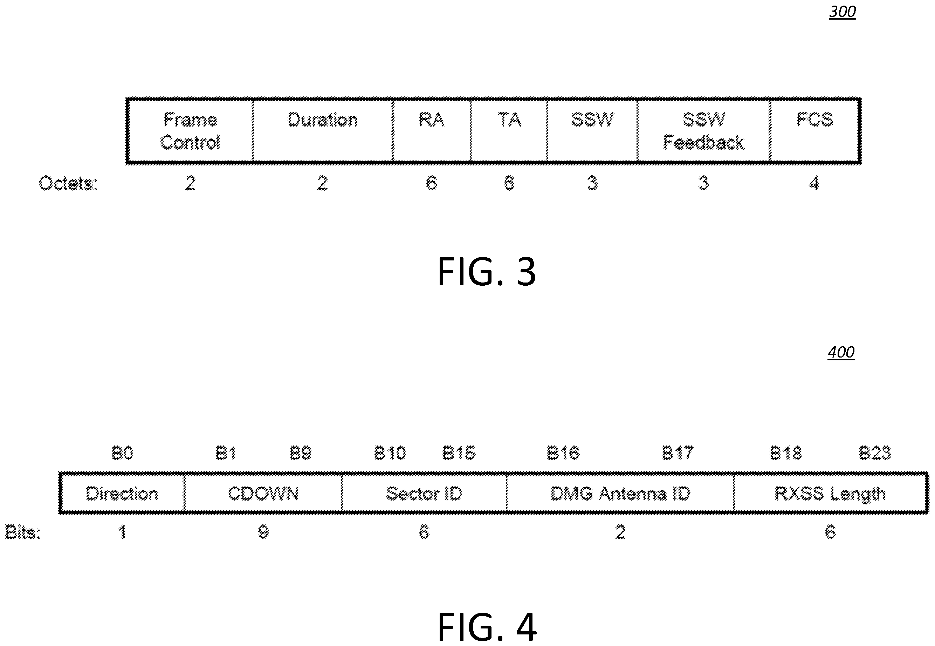

FIG. 3 depicts an exemplary SSW frame 300. An SSW frame 300 may be transmitted using control PHY. An SSW frame 300 may include one or more of a frame control field, a duration field, a receiver address (RA) field, a transmitter address (TA) field, an SSW field, an SSW feedback field, or a frame check sequence (FCS) field.

FIG. 4 depicts an exemplary SSW field 400. An SSW field 400 may include one or more of a direction field, a countdown (CDOWN) field, a sector ID field, a directional multi-gigabit (DMG) Antenna ID field, or a receive sector sweep (RXSS) length field.

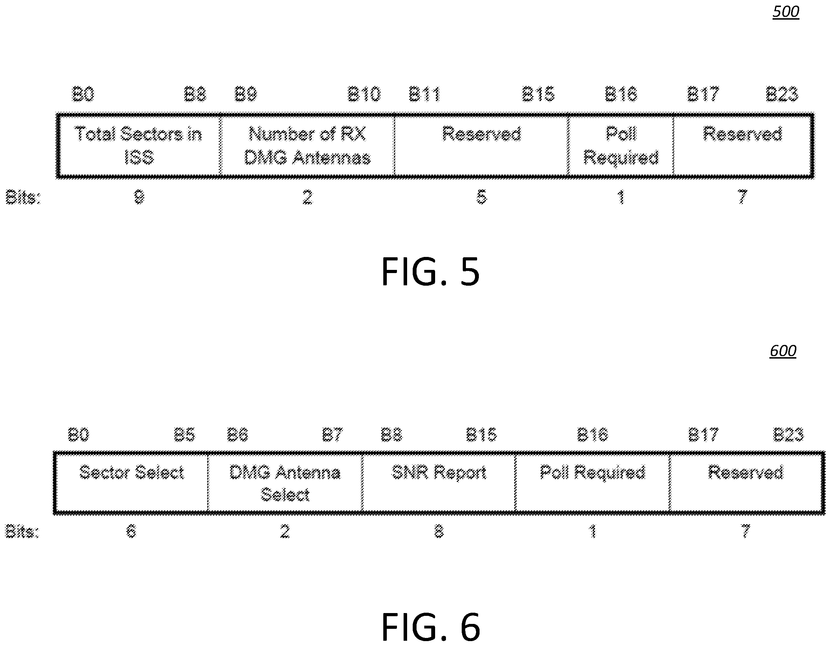

FIG. 5 depicts an exemplary SSW feedback field 500. The exemplary SSW feedback field 500, as shown in FIG. 5, may be transmitted as part of an ISS. An SSW feedback field 500 may include one or more of a total sectors in ISS field, a number of RX DMG Antennas field, a poll required field, or one or more reserved fields.

FIG. 6 depicts another exemplary SSW feedback field 600. The exemplary SSW feedback field 600, as shown in FIG. 6, may be transmitted not as part of an ISS. An SSW feedback field 600 may include one or more of a sector select field, a DMG Antenna Select field, a signal-to-noise ratio (SNR) report field, a poll required field, or a reserved field.

Beam refinement (*e.g.,* a beam refinement protocol (BRP)) may enable a STA to improve its antenna configuration (*e.g.,* or antenna weight vectors) for transmission and/or reception. Beam refinement may include using beam refinement protocol (BRP) packets to train the receiver and/or transmitter antenna(s). There may be two types of BRP packets: BRP-RX (*e.g.,* BRP receiver) packets and BRP-TX (*e.g.,* BRP transmitter) packets.

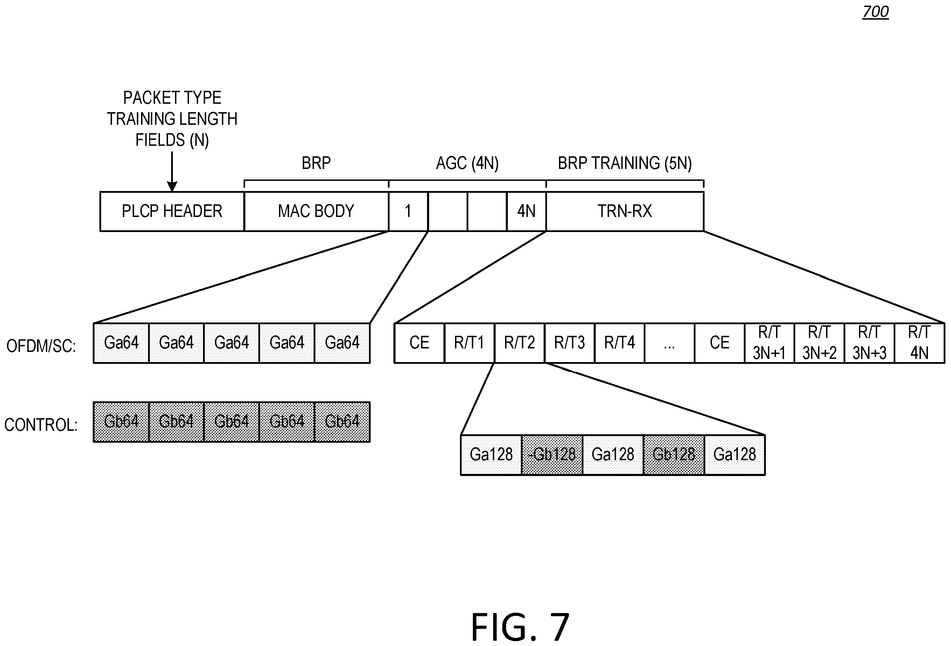

FIG. 7 is an exemplary physical layer convergence procedure (PLCP) protocol data unit (PPDU) 700 which carries a BRP frame and training (TRN) fields. A BRP packet may be carried by a directional multi gigabit (DMG) PPDU, for example, and may be followed by a training field. The training field may include an AGC field. The training field may be a transmitter or receiver training field.

A value of N, as shown in FIG. 7, may be the Training Length (*e.g*, training length given in the header field). The training length may indicate that the automatic gain control (AGC) has 4N subfields and may indicate that the TRN-R/T field has 5N subfields. The channel estimation (CE) subfield may be the same as the CEF in the preamble. Subfields (*e.g*., all subfields) in the beam training field may be transmitted using rotated *π*/2-BPSK modulation. A BRP MAC frame may be an Action No acknowledgment (ACK) frame and may include one or more of the following fields: Category, Unprotected DMG Action, Dialog Token, BRP Request field, DMG Beam Refinement element, or Channel Measurement Feedback element 1 to Channel Measurement Feedback element k.

The IEEE 802.11ay physical layer (PHY) and the IEEE 802,11ay medium access control layer (MAC) may have at least one mode of operation capable of supporting a maximum throughput of at least 20 gigabits per second (*e.g*., measured at the MAC data service access point) and may maintain or improve the power efficiency (*e.g*., per station). The IEEE 802.11ay physical layer (PHY) and the IEEE 80211ay medium access control layer (MAC) may have license-exempt bands above 45 GHz that may have backward compatibility and/or may coexist with directional multi-gigabit stations (*e.g.,* legacy, *e.g.,* as defined by IEEE 802.11ad-2012 amendment) operating in the same band. 802.11ay may operate in the same band as legacy standards. 802.11ay may include support for backward compatibility and/or coexistence with legacies in the same band.

802.11ad supports single data stream transmission. For BF training, one (*e.g*., only one) transmit/receive beam may be trained and/or measured at each time. TGay may support more than one RF frontend at the devices. Concurrent multi-stream transmission and/or receiving may be used in TGay. The MIMO BF training may use the multiple RF frontends and/or may reduce training overhead.

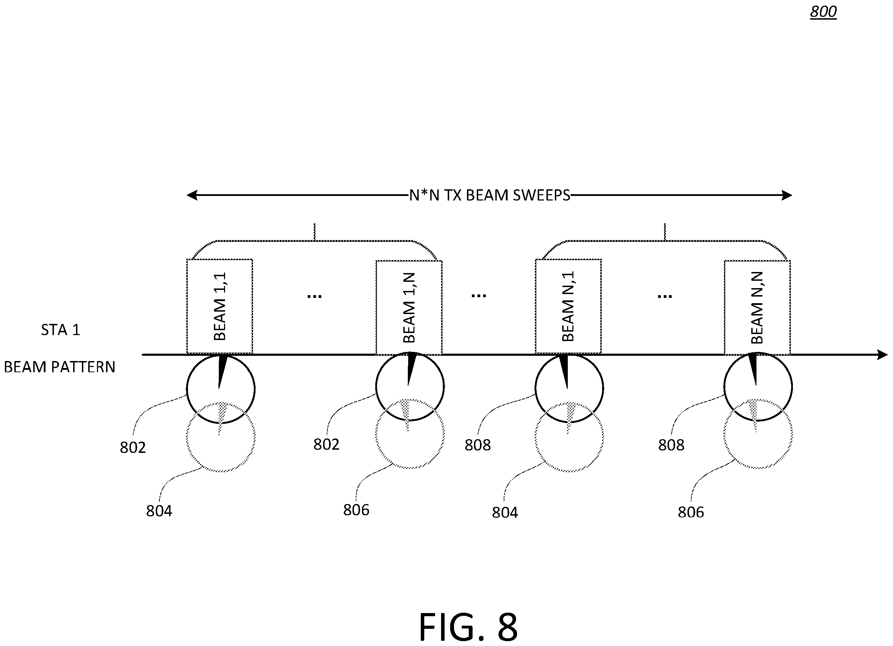

FIG. 8 illustrates an example beam pattern 800 for a STA. N^{∗}N Tx Beam sweeps may be used to go through possible beam pattern combinations (*e.g*., all the possible combinations) as shown in FIG. 8 for STA1. A STA may transmit using one or more transmit beams. For example, a STA may use one or more RF frontends to transmit using one or more transmit beams. A STA may send a first set of transmit frames using a first set of transmit beams. A STA may send a second set of transmit frames using a second set of transmit beams. The second set of transmit beams may include one or more transmit beams from the first set of transmit beams. For example, STA1 may have two RF frontends and may form two beams concurrently. A first RF frontend may form N different beams or it may want to sweep and/or train N different beams. A second RF frontend may form N different beams or it may want to sweep and/or train N different beams. The STA may perform N^{∗}N transmit beam sweeps. For example, the STA may sweep N transmit beams for the first RF frontend and may sweep N transmit beams for the second RF frontend. The first RF frontend may form a first beam 802 and the second RF frontend may form a second beam 804. The first beam 802 and the second beam 804 may have the same beam index (*e.g.*, beam 1). The STA may transmit a training frame using the first beam 802 and the second beam 804. The first RF frontend may continue using the first beam 802 while the second RF frontend may sweep from the second beam 804 to a third beam 806 (*e.g.,* beam N). The first RF frontend may form a fourth beam (*e.g.,* beam 2, not shown). The STA may transmit another training frame using the fourth beam and the second beam 804. The first RF frontend may continue using the fourth beam while the second RF frontend may sweep from the second beam 804 to the third beam 806. The first RF frontend may continue to sweep different (*e.g.,* all) beams for the first RF frontend while sweeping the second RF frontend from the second beam 804 to the third beam 806 for each respective first RF frontend beam. For example, the first RF frontend may form a fifth beam 808 (*e.g*., beam N) and the second RF frontend may sweep from the second beam 804 to the third beam 806.

A multi-Tx training may include a transmitter/initiator simultaneously transmitting frame(s) through more than one beams and/or sectors. The transmitter may send the frames in one or more time slots of a training period. Concurrent beams may be orthogonal at the transmitter side. The transmitter may use one or more antenna(s) and/or antenna array(s) (*e.g*., a polarized antenna) or an orthogonal directional antenna to create the orthogonality. Multiple RF frontends may be used at the transmitter/initiator side. Multi-Rx training may include a receiver/responder simultaneously receiving frame(s) through more than one beams and/or sectors. Multiple RF frontends may be used at the receiver/responder side. Multi-Tx and/or Multi-Rx capability may be indicated by the STAs and may be indicated in management frames and/or control frames (*e.g*., EDMG capability, Transmit BF capability, and Receive BF capability fields).

Backward compatible implementations may be disclosed. For example, a legacy STA (*e.g*., having one RF frontend) may participate in the broadcast/multicast training. The AP/PCP may be devices with multiple RF frontends available. The AP/PCP may be the initiator of the Training TXOP. One or more STAs (*e.g*., including both EDMG STAs and legacy STAs) may be potential responders (*e.g*., if they want to perform BF training/tracking with the AP/PCP). Single input single output (SISO) and/or MIMO BF training may be used concurrently. One or more legacy STAs may use a training TXOP for SISO BF training. One or more EDMG STAs may use the same training TXOP for SISO/MIMO BF training. A legacy STA may be a STA that does not support MIMO BF training and/or does not have multiple RF frontends. An EDMG STA may be an extended directional multi-gigabit STA.

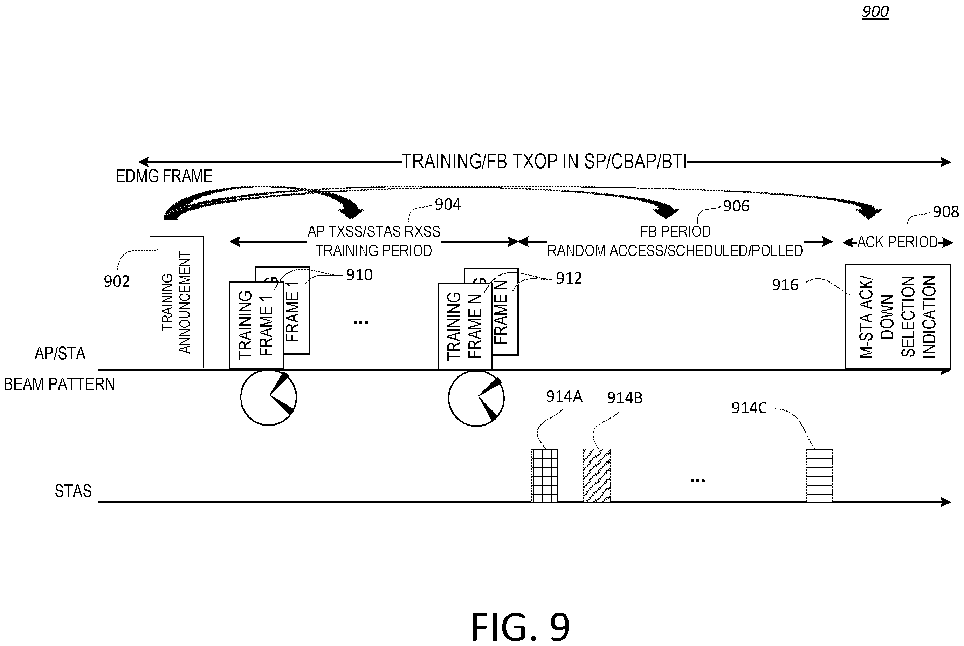

FIG. 9 depicts an exemplary MIMO BF training 900. A Training Frame may be transmitted using a DMG PPDU and may be backward compatible. A DMG PPDU may include a Channel Estimation (CE) field (*e.g.,* may be able to perform channel estimation of a single data stream). The AP/PCP or the initiator may transmit simultaneously through multiple beams and/or sectors. The AP/PCP may transmit the same data packet. In a MIMO BF training 900, the initiator may use a training announcement, a training period 904, a feedback period 906, and/or an acknowledgment period 908.

For the training announcement, an initiator (*e.g*., an AP/PCP/STA) may acquire a channel, *e.g.*, through contention and/or scheduling. The initiator may transmit, to one or more responders over the channel, a training announcement frame 902. The training announcement frame 902 may be an Encoded DMG (EDMG) MAC frame. The training announcement frame 902 may be a broadcast/multicast frame which may be transmitted at a low rate. The training announcement frame 902 may be carried by an EDMG/DMG PPDU. The training announcement frame 902 may indicate a training period 904 that may be used for multi-TX, and/or a multi-RX training scheme, and/or a combination of multi-TX training with the responder receive training. The initiator may determine whether to perform a multi-TX training and/or multi-RX training based on a capability setting exchanged between the initiator and responder. The capability setting exchange may occur in an association stage, beacon transmission stage, or before (*e.g*., just before) sending and/or receipt of the training announcement frame 902. The training announcement frame 902 may indicate that the TXOP may be a cascading TXOP (*e.g.*, where more than one training period may be expected). For example, a first STA may send a training announcement frame 902 to a second STA. The training announcement frame 902 may indicate a training period 904 and a concurrent transmit and receive training.

A training period 904 may begin after receipt of the training announcement frame 902. After the training announcement frame 902, the initiator, *e.g.,* an AP/PCP/STA, may transmit a training frame 910 simultaneously (*e.g.,* using two or more different/orthogonal beams). The training frame 910 may be carried in a DMG PPDU. The MAC body of the training frame may be a SSW frame or other type of frame defined in a standard (*e.g.,* legacy standard). Multiple beams and/or sectors may be used (*e.g.,* simultaneously) to transmit the training frame 910. The same MAC frame with a Sector ID may be indicated in the training frame 910. An EDMG STA may interpret the Sector ID as a Sector Pairing ID.

A mapping between a Sector Pairing ID and corresponding paired sectors may be signaled (*e.g.,* in the training announcement frame). For example, a Sector Pairing ID k may refer to sectors m and n. In this example, Sector Pairing ID k may be included in the training frame, which may be transmitted by the initiator using sectors m and n simultaneously. The mapping of Sector Pairing ID k = Sector (m,n) may be determined based on the training announcement frame. The mapping of Sector Pairing ID k = Sector (m, n) may be defined in the training announcement frame. The legacy STAs or EDMG STAs may not notice that the training frame may be transmitted using more than one sector. The training frame 910 may include extra training sequences (*e.g*., for responder receive training). The beams and/or sectors utilized (*e.g.,* for the extra training sequences) may be the same as those used for the preamble and/or the MAC body of the training frame 910. A STA may send one or more additional training frames 912 via the multiple beams and/or sectors used to transmit the training frame 910.

A feedback (FB) period 906 may be an inter-frame space (xIFS) period after the end of the training period 904. The initiator may prepare to receive feedback 914A, 914B, 914C from one or more responders, which may be referred as the feedback period 906. The FB period 906 may be transmitted with or without polling. The access scheme may be schedule based or random access based. The initiator may receive a FB frame with a down selection request field. For example, a responder may include a down selection request in feedback 914A, 914B, 914C sent to the initiator. The initiator may determine whether to perform a down selection training based on whether a received feedback 914 includes a down selection request. A down selection training may include selecting a subset of the transmit beams used in the training period 904. For example, the best N transmit beams used in the training period 904 may be selected for the down selection training.

An acknowledgement period 908 may be an xIFS period after the end of the FB period 906. The initiator may transmit one or more acknowledgement frames 916 to one or more responders. An acknowledgement frame 916 may be aggregated with a control frame, which may carry a down selection indication. A down selection indication may be sent to the one or more responders. The down selection indication may be carried in an acknowledgment frame 916, for example, a modified acknowledgement frame. The down selection indication may indicate a need to perform down selection. For example, the down selection indication may be used by the initiator to indicate, to the responder, that a down selection training period is required. Beams (*e.g*., beams of a certain quality) among the pairing beams fed back from the responder may be selected and repaired or regrouped in the down selection training period. The down selection training period may be within the current training TXOP and/or may follow the ACK transmissions. The down selection training period may be in a separate training TXOP. A more training bit may be set in the acknowledgement frame 916 or the control frame, which may be aggregated with the acknowledgement frame 916. The more training bit may indicate a cascaded training refinement period when a down selection MIMO training refinement may be expected. The down selection training period may not be part of the current training TXOP if the more training bit is not set. The down selection training period may be scheduled later. A last training bit may be set. The last training bit may indicate that no more training periods may be expected after the acknowledgement frame 916.

A responder may receive (*e.g*., detect) a training announcement frame 902. The responder may notice one or more of: the allocation of the training period 904, the FB period 906, or the acknowledgement period 908. The responder may notice that the following training period 904 may be used for a multi-TX and/or a multi-RX training scheme, or a combination of multi-TX training with the responder receive training. In the case that the TXOP may be used for a multi-RX training scheme, and the responder may be able to perform multi-RX training, the responder may perform a multi-RX training during the training period 904.

In the training period 904, the responder may detect, using a quasi-omni beam or another sector/beam/AVW, that one of the training frames has been selected. The responder may know the remaining number of training frames to be transmitted and may base the remaining number of training frames to be transmitted on the information carried in the MAC frame of the training frame. If a null data packet (NDP) training frame is utilized, the responder may notice that an NDP training frame is utilized by checking an NDP indication bit in a PLCP header. The responder may re-interpret the PLCP header of the training frame 910, 912 to determine the remaining number of training frames to be transmitted. Based on the information carried in the training frame PLCP header and/or the training announcement frame, the responder may receive K extra AGC/Training sequences that may be appended to the end of the current training frame.

The responder may perform multi-RX training in the training period 904 (*e.g.,* if it has multi-RX capability). For the PLCP header and MAC body part, the responder may receive using two or more receive beams. For the extra training sequences, the responder may switch the receive beams for receive training. For each training sequence, the responder may form two or more receive beams for measurement.

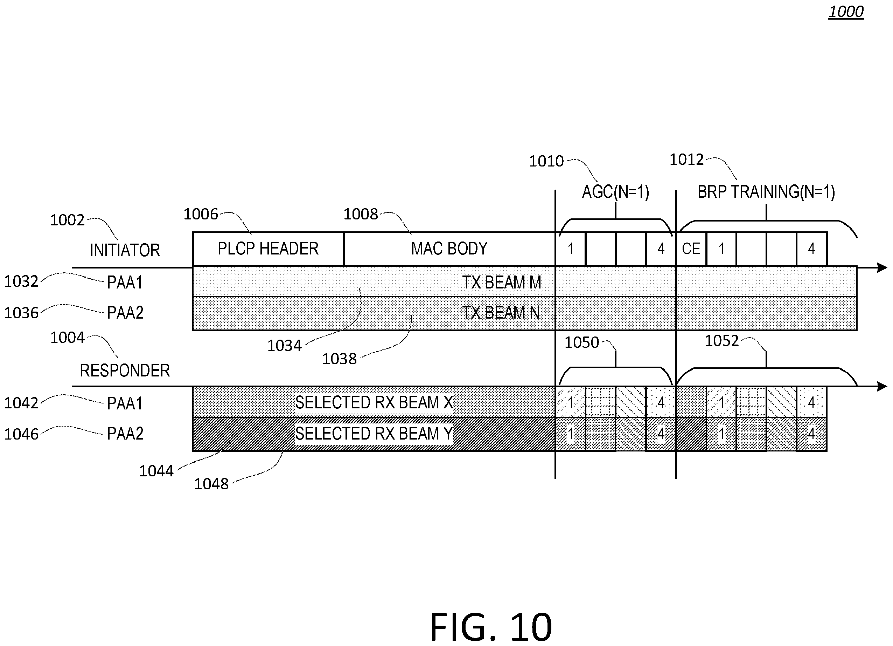

FIG. 10 depicts an exemplary antenna pattern for a multi-transmitter/receiver training 1000. In this example, both initiator and receiver may have two phased antenna arrays (PAAs) while each of them may be connected with an RF frontend. The initiator may transmit a training frame using beam m and beam n which may be formed by PAA1 and PAA 2 respectively. The responder may use two selected Rx beams, which may be formed by responder PAA1 and PAA2 respectively for PLCP header and MAC body reception. For the following extra AGC and training sequences, the responder PAA1 and PAA2 may sweep their receive beams respectively. The example shown in Figure 9 may be used where backward compatibility may be not required.

As shown in FIG. 10, an initiator 1002 may send, to a responder 1004, a message having a PLCP header 1006, a MAC body 1008, an access channel (ACH) 1010 having four AGC fields and a BRP training 1020, having a CE field and four BRP fields. The initiator 1002 may have a PAA1 1032 that uses TX Beam M 1034 and PAA2 1036 that uses TX Beam N 1038. The responder 1004 that may have PAA1 1042 and PAA2 1046. PAA1 1042 may have a selected beam X 1044 and an ACH 1050 having four AGC fields and a BRP training field 1052 having four or five BRP fields. For PAA1 1042 and/or PAA2 1046, a first AGC field may correspond to a second BRP field. A second AGC field may correspond to a third BRP field. A third AGC field may correspond to a fourth BRP field. A fourth AGC field may correspond to a fifth BRP field. PAA2 1046 may be associated with selected beam Y 1048 and an ACH 1050 having four AGC fields and a BRP training field 1052 having four or five BRP fields.

A feedback period may be used by a responder. The responder may begin the feedback period xIFS time after the end of the training period. The responder may estimate a length of the training period. The responder may prepare FB based on the type of FB period. The FB may be associated with the one or more transmit beams of the initiator and may include one or more of channel state information (CSI) or one or more beam identifications (IDs). The FB may be sent using a FB frame. The responder may know the duration of the training period (e.g, through the Training Announcement Frame). The responder may know the boundary of the training period and/or FB period. The FB period may be transmitted with or without polling. The multiple access scheme utilized may be schedule based or random access based. The responder may transmit the FB frame using more than one beam (*e.g*., in the case the multi-RX scheme is utilized in previous training period). For example, the initiator may indicate that it may be able to receive using multiple beams during the FB period (*e.g*., this indication may be included in the Training Announcement frame, and/or the Training frame). The FB frame may be modulated and transmitted using multiple data streams. The FB may include a down selection request. For example, the responder may include the down selection request indication in the FB frame (*e.g.,* if the responder is requesting more trainings).

An acknowledgment period may be the xIFS period after the end of the FB period. The responder may prepare to receive one or more acknowledgement frames from the initiator. The acknowledgement frame(s) may be aggregated with a down selection indication. For example, the down selection indication may be included in an acknowledgment frame of the one or more acknowledgment frames. The down selection indication may indicate a need to perform down selection (*e.g*., another down selection training period) which may be used to select one or multiple best beams among the pairing beams. The down selection training period may be within the current training TXOP and follow the ACK transmissions. The down selection training period may not be part of the current Training TXOP, *e.g.,* may be scheduled later.

EDMG may not be backward compatible. The AP/PCP may be used with devices having multiple RF frontends available. The AP/PCP may be the initiator of the training TXOP. One or more EDMG STAs may be potential responders (*e.g.,* the STAs may want to perform BF training/tracking with the AP/PCP). EDMG may be used for SISO and/or MIMO BF training concurrently. STAs may use the training TXOP for SISO BF training. STAs may use the same training TXOP for SISO/MIMO BF training.

The training TXOP may be used for one point to multi point MIMO BF training, which may involve one or more broadcast/multicast transmissions. The training TXOP may be used for point to point MIMO BF training. The training TXOP may or may not be cascaded with another training TXOP, *e.g.,* a down selection training TXOP.

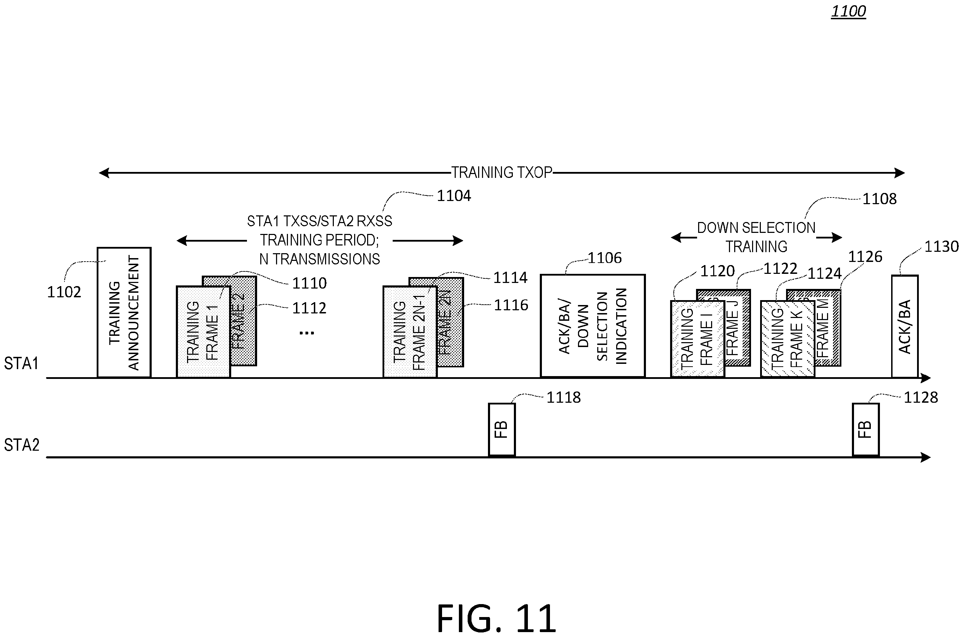

FIG. 11 depicts an exemplary P2P cascaded training TXOP 1100. The frames in the cascaded training TXOP 1100 may not be understood by the legacy STAs. The P2P cascaded training TXOP 1100 may include backward compatibility. The training frames in the P2P cascaded training TXOP 1100 may be transmitted using a legacy format.

A P2P cascaded training TXOP 1100 may include one or more of a training announcement 1102, *e.g.,* a training announcement frame, a training period 1104, a feedback period, an acknowledgment period, or a down selection training period 1108. Multiple training frames may be sent in a plurality of time slots of the training period 1108.

For the training announcement 1102, an initiator, *e.g.,* an AP/PCP/STA, may acquire a channel through contention and/or scheduling. The initiator may transmit one or more of the training announcement frame, an EDMG MAC frame (*e.g.,* a newly designed EDMG MAC frame), or a unicast frame for P2P transmission. The training announcement frame may be transmitted, to one or more responders (*e.g.,* STAs), before beamforming training. Low data rate transmission may be used and this may provide protection. The training announcement frame may be carried by a new or legacy (EDMG/DMG) PPDU. The training announcement frame may indicate that the training period (*e.g.,* the following training period) may be used for a multi-TX and/or a multi-RX training scheme, or a combination of multi-TX training with the responder receive training. The training announcement frame may indicate that the TXOP may be a cascading TXOP (*e.g.,* where more than one training period may be expected).

After the training announcement frame, the initiator, *e.g.,* an AP/PCP/STA, may transmit, during a training period 1104, multiple first training frames 1110, 1112 (*e.g.,* simultaneously) and may use two or more different/orthogonal beams for transmission of the multiple first training frames 1110, 1112. The multiple first training frames 1110, 1112 may be sent in a first time slot of the training period 1104. The multiple first training frames 1110, 1112 transmitted using different beams concurrently may be different, and they may carry corresponding beam IDs. The initiator may send multiple second training frames 1114, 1116. The multiple second training frames 1114, 1116 may be sent in a second time slot of the training period 1104. A training frame may be carried in an EDMG PPDU. More than one channel estimation field or orthogonal channel estimation fields may be included such that the receiver may estimate MIMO channels from multiple transmission ports/PAAs/RF frontends. The MAC body of the training frame may be a SSW frame, a BRP frame, a null data frame, or an EDMG frame.

A feedback period may be used. The feedback period may be the xIFS period after the end of training period 1104. The responder may transmit a first feedback frame 1118. The first feedback frame 1118 may include a down selection/Extra MIMO BF request indication and/or BEAM ID CSI feedback. The down selection/extra MIMO BF request indication may be set to: 0 or 1. The first feedback frame 1118 may include one or more CDOWN values.

For the down selection/extra MIMO BF request indication set to 0, the training frames may be transmitted concurrently using different/orthogonal beams. The responder may detect the concurrent beams (*e.g.,* all of the concurrent beams). The beam directions may fit the responder. The set of beams may be used for multi-stream MIMO transmission.

For the down selection/extra MIMO BF request indication set to 1 at least some of the beams may be detected. Some of the beam directions that do not target the receiver may not be detected. If the number of detected beams is less than the number of MIMO streams to be supported, the beams which may be detected may be recorded and/or used as part of the multi-stream MIMO transmission. A following MIMO down selection training may be used.

The responder may provide Beam ID/CSI feedback in the first feedback frame 1118. For Beam ID/CSI feedback using beam ID feedback, the responder may feedback M beams (*e.g.,* M beams having a certain quality). M may be equal to or greater than the number of MIMO streams to be supported. The responder may feedback the time domain and/or frequency domain CSI (*e.g.,* in the case of channel state information (CSI) feedback). The responder may feedback one or more CDOWN values.

An acknowledgment period may be the xIFS period after the end of the FB period. The initiator may transmit an acknowledgement frame 1106. The acknowledgement frame 1106 may be aggregated with a down selection indication. The down selection indication may be used by the initiator to indicate a down selection training period 1108. The down selection indication may be a MIMO beamforming request indication. The down selection training period 1108 may be used to select MIMO beams among the beams indicated in the feedback from the responder (*e.g.,* the MIMO beams of a certain quality). The down selection training period 1108 may or may not be within the current Training TXOP.

The down selection training period 1108 may be within the current Training TXOP and/or may follow the ACK transmissions. A training bit may be set to indicate the cascaded training refinement and/or down selection may be expected.

The down selection training period 1108 may not be part of the current training TXOP. The down selection training period 1108 may be scheduled after the current training TXOP. The down selection training period 1108 the initiator may send one or more third training frames 1120, 1122 (*e.g*., training frame I and training frame J) via multiple down selected beams. The multiple down selected beams may be a subset of the first set and second set of transmit beams used in the training period 1104. For example, the initiator may send the one or more third training frames 1120, 1122 via a subset of the first and second set of transmit beams used in the training period 1104. The multiple down selected beams may be determined based on the first feedback 1118 received from the responder. The initiator may send one or more fourth training frames 1124, 1126 (*e.g.,* training frame K and training frame L) via multiple down selected beams. A training bit (*e.g.,* a last training bit) may be set to indicate that no more training periods may be expected (*e.g*., after the acknowledgement frame). The last training bit may also be interpreted as an indication of truncating the TXOP (*e.g*., the current TXOP).

A down selection training period may be used. The initiator may use the re-pair beams and may transmit using the beam pair (*e.g*., simultaneously for MIMO training).

The feedback period and/or the acknowledgement period may follow the down selection training period 1108. The responder may determine second feedback 1128, for example based on the training frames (*e.g*., the one or more third and/or fourth training frames) received during the down selection training period 1108. The second feedback 1128 may be associated with one or more transmit beams used to send the third and/or fourth training frames. The second feedback 1128 may include CSI and/or one or more beam IDs associated with one or more second best beams determined in the down selection training period 1108. The initiator may send a second ACK frame 1130, for example, in response to receipt of the second feedback 1128. A second down selection training period may follow if the MIMO BF training criteria is not met. The MIMO BF training criteria may depend on the orthogonality/rank/condition number of the virtual channel selected. The MIMO BF may be implementation dependent.

As shown in FIG. 11, STA1 may be the initiator and STA 2 may be the responder. STA1 may train 2N beams. STA1 may perform 2N transmissions. STA1 may indicate the transmission and may indicate that the transmission is from a virtual antenna port or PAA or RF frontend (*e.g*., as shown in FIG. 9, STA1 has two PAAs or two RF frontends). STA2 may feedback M beams (*e.g*., beams of a certain quality) for each antenna port/PAA/RF frontend. STA2 may have multiple RX PAAs/chains. STA2 may feedback M beams (*e.g*., beams of a certain quality) from the measurement of its PAAs/chains (*e.g*., all PAAs/chains) and each PAA/chain may be for each Tx PAA/chain. M may be a pre-selected number or set/signaled by the initiator in the training announcement frame. The cascaded Training TXOP may be used for MIMO beam training and/or beam pairing refinement, *e.g*., as shown in FIG. 11. The BF training, described herein, may be used for other purposes. The first training period may be used for analog domain beam sweeping. The second training period may be used for digital domain closed loop MIMO precoding training. Hybrid beamforming may be implemented. The training type (*e.g*., MIMO beam pairing or hybrid BF training etc.) may be determined by the initiator and/or suggested by the responder. The FB frame after the first training period may carry an indication to suggest either MIMO beam pairing, hybrid BF training, or another type of training. The initiator may indicate the exact or decided training type for the following cascaded training period in the Acknowledgement period. The initiator may use a down selection indication to indicate the training type or add a training type field in the Acknowledgement frame.

BF training, *e.g.,* as shown in FIG. 11, may be used with P2MP with a broadcast/multicast Training Announcement frame. The FB period may be transmitted with or without polling. The FB period may be schedule based or random access based.

The same training frame(s) may be utilized for the first training period and following down selection training period. Different training frames may be used. For example, training frames designed for SLS or enhanced SLS (eSLS) may be used for some training periods/down selection training periods, while the training frames designed for BRP or enhanced BRP (eBRP) may be used for some training periods/down selection training periods.

ACK/BA frame with a down selection indication or ACK/BA frame aggregated with a control frame which carries a down selection indication may be used in the exemplary P2P cascaded training TXOP shown in FIG. 11. An ACK/BA frame may be used to acknowledge the reception of feedback frame. xIFS period later, a control frame, such as a Training announcement frame or a Down selection/Refinement training announcement frame, may be used to indicate the start of a down selection training period. The first training period and the second training period (e.g., the down selection training period 1108 shown in FIG. 11) may not need to be adjacent in time within one TXOP. They may be transmitted separately in multiple TXOPs or service periods.

Although the solutions described herein consider 802.11 specific protocols, it is understood that the solutions described herein are not restricted to this scenario and may be applicable to other wireless systems.

Although features and elements may be described above in particular combinations or orders, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A first station (STA) comprising:
a processor configured to:
send, to a second STA, a training announcement frame (1102) that indicates a training period and a concurrent transmit and receive training;
send, to the second STA during a training transmit opportunity (TXOP), a first set of training frames (1110, 1112) via a first set of transmit beams in a first time slot of the training period, wherein each of the training frames comprises a header, a MAC body, and one or more training fields;
send, to the second STA during the training TXOP, a second set of training frames (1114, 1116) via a second set of transmit beams in a second time slot of the training period;
receive, from the second STA during the training TXOP, feedback (1118) associated with one or more transmit beams of the first and second set of transmit beams, wherein the feedback includes channel state information (CSI) and one or more beam identifications (IDs); and
perform a down selection training during the training TXOP, wherein the down selection training comprises sending a set of down selection training frames (1120, 1122, 1124, 1126) via a down-selected set of transmit beams, and wherein the down-selected set of transmit beams are a subset of the first set and second set of transmit beams and are determined based on the received feedback.

2. The first STA of claim 1, wherein the processor is further configured to:
send one or more acknowledgment (ACK) frames, to the second STA, in response to the received feedback; and
send a down selection indication to the second STA, wherein the down selection indication indicates a need to perform down selection.

3. The first STA of claim 2, wherein the down selection indication is included in an ACK frame of the one or more ACK frames.

4. The first STA of claim 2, wherein the down selection indication is a multiple input multiple output (MIMO) beamforming request indication.

5. The first STA of claim 1, wherein the processor is further configured to send the first and second set of training frames to one or more other STAs.

6. The first STA of claim 1, wherein the down-selected set of transmit beams are determined based on one or more of beam combinations used in the training period or the one or more beam IDs indicated in the received feedback.

7. The first STA of claim 1, wherein the first STA is an access point (AP) STA.

8. The first STA of claim 1, wherein the one or more beam IDs are associated with one or more best beams selected by the second STA.

9. A method performed by a first station (STA), the method comprising:
sending, to a second STA, a training announcement frame (1102) that indicates a training period and a concurrent transmit and receive training;
sending, to the second STA during a training transmit opportunity (TXOP), a first set of training frames (1110, 1112) via a first set of transmit beams in a first time slot in the training period, wherein each of the training frames comprises a header, a MAC body, and one or more training fields;
sending, to the second STA during the training TXOP, a second set of training frames (1114, 1116) via a second set of transmit beams in a second time slot in the training period;
receiving, from the second STA during the training TXOP, feedback associated with one or more transmit beams of the first and second set of transmit beams, wherein the feedback includes channel state information (CSI) and one or more of beam identifications (IDs); and
performing a down selection training during the training TXOP, wherein the down selection training comprises sending a set of down selection training frames (1120, 1122, 1124, 1126) via a down-selected set of transmit beams, wherein the down-selected set of transmit beams are a subset of the first set and second set of transmit beams and are determined based on the received feedback.

10. The method of claim 9, further comprising:
sending one or more acknowledgment (ACK) frames, to the second STA, in response to the received feedback; and
sending a down selection indication to the second STA, wherein the down selection indication indicates a need to perform down selection.

11. The method of claim 10, wherein the down selection indication is a multiple input multiple output (MIMO) beamforming request indication.

12. The method of claim 9, further comprising:
sending the first and second set of training frames to one or more other STAs.

13. The method of claim 9, wherein the down-selected set of transmit beams are determined based on one or more of beam combinations used in the training period or the one or more beam IDs indicated in the received feedback.

14. The method of claim 9, wherein the first STA is an access point (AP) STA.

15. The method of claim 9, wherein the one or more beam IDs are associated with one or more best beams selected by the second STA.

## Patentansprüche

1. Erste Station (STA), die umfasst:
einen Prozessor, der für Folgendes konfiguriert ist:
Senden, an eine zweiten STA, eines Trainingsankündigungsframes (1102), der einen Trainingszeitraum und ein gleichzeitiges Sende- und Empfangstraining anzeigt;
Senden, an die zweite STA während einer Trainingsübertragungsgelegenheit (Transmit Opportunity, TXOP), eines ersten Satzes von Trainingsframes (1110, 1112) über einen ersten Satz von Sendestrahlen in einem ersten Zeitschlitz des Trainingszeitraums, wobei jeder der Trainingsframes einen Header, einen MAC-Körper und ein oder mehrere Trainingsfelder umfasst;
Senden, an die zweite STA während der Trainings-TXOP, eines zweiten Satzes von Trainingsframes (1114, 1116) über einen zweiten Satz von Sendestrahlen in einem zweiten Zeitschlitz des Trainingszeitraums;
Empfangen, von der zweiten STA während der Trainings-TXOP, einer Rückmeldung (1118), die mit einem oder mehreren Sendestrahlen des ersten und des zweiten Satzes von Sendestrahlen verknüpft ist, wobei die Rückmeldung Kanalzustandsinformationen (Channel State Information, CSI) und eine oder mehrere Strahlkennungen (Identifications, IDs) enthält; und
Ausführen eines Abwärtsauswahltrainings während der Trainings-TXOP, wobei das Abwärtsauswahltraining das Senden eines Satzes von Abwärtsauswahltrainingsframes (1120, 1122, 1124, 1126) über einen abwärtsausgewählten Satz von Sendestrahlen umfasst, und
wobei der abwärtsausgewählte Satz von Sendestrahlen eine Teilsatzes des ersten Satzes und des zweiten Satzes von Sendestrahlen ist und auf der Grundlage der empfangenen Rückmeldung bestimmt wird.

2. Erste STA nach Anspruch 1, wobei der Prozessor des Weiteren für Folgendes konfiguriert ist:
Senden eines oder mehrerer Bestätigungs (Acknowledgment, ACK)-Frames an die zweite STA in Reaktion auf die erhaltene Rückmeldung; und
Senden eines Abwärtsauswahlhinweises an die zweite STA, wobei der Abwärtsauswahlhinweis eine Notwendigkeit anzeigt, eine Abwärtsauswahl auszuführen.

3. Erste STA nach Anspruch 2, wobei der Abwärtsauswahlhinweis in einem ACK-Frame des einen oder der mehrerer ACK-Frames enthalten ist.

4. Erste STA nach Anspruch 2, wobei der Abwärtsauswahlhinweis ein Multiple Input Multiple Output (MIMO)-Strahlformungsanforderungshinweis ist.

5. Erste STA nach Anspruch 1, wobei der Prozessor des Weiteren dafür konfiguriert ist, den ersten und den zweiten Satz von Trainingsframes an eine oder mehrere andere STAs zu senden.

6. Erste STA nach Anspruch 1, wobei der abwärtsausgewählte Satz von Sendestrahlen auf der Grundlage von in dem Trainingszeitraum verwendeten Strahlkombinationen oder der einen oder der mehreren in der empfangenen Rückmeldung angegebenen Strahl-IDs bestimmt wird.

7. Erste STA nach Anspruch 1, wobei die erste STA eine Zugangspunkt (Access Point, AP)-STA ist.

8. Erste STA nach Anspruch 1, wobei die eine oder die mehreren Strahl-IDs mit einem oder mehreren durch die zweite STA ausgewählten besten Strahlen verknüpft sind.

9. Verfahren, das durch eine erste Station (STA) ausgeführt wird, wobei das Verfahren umfasst:
Senden, an eine zweiten STA, eines Trainingsankündigungsframes (1102), der einen Trainingszeitraum und ein gleichzeitiges Sende- und Empfangstraining anzeigt;
Senden, an die zweite STA während einer Trainingsübertragungsgelegenheit (Transmit Opportunity, TXOP), eines ersten Satzes von Trainingsframes (1110, 1112) über einen ersten Satz von Sendestrahlen in einem ersten Zeitschlitz des Trainingszeitraums, wobei jeder der Trainingsframes einen Header, einen MAC-Körper und ein oder mehrere Trainingsfelder umfasst;
Senden, an die zweite STA während der Trainings-TXOP, eines zweiten Satzes von Trainingsframes (1114, 1116) über einen zweiten Satz von Sendestrahlen in einem zweiten Zeitschlitz in dem Trainingszeitraum;
Empfangen, von der zweiten STA während der Trainings-TXOP, einer Rückmeldung, die mit einem oder mehreren Sendestrahlen des ersten und des zweiten Satzes von Sendestrahlen verknüpft ist, wobei die Rückmeldung Kanalzustandsinformationen (Channel State Information, CSI) und eine oder mehrere Strahlkennungen (Identifications, IDs) enthält; und
Ausführen eines Abwärtsauswahltrainings während der Trainings-TXOP, wobei das Abwärtsauswahltraining das Senden eines Satzes von Abwärtsauswahltrainingsframes (1120, 1122, 1124, 1126) über einen abwärtsausgewählten Satz von Sendestrahlen umfasst,
wobei der abwärtsausgewählte Satz von Sendestrahlen eine Teilsatzes des ersten Satzes und des zweiten Satzes von Sendestrahlen ist und auf der Grundlage der empfangenen Rückmeldung bestimmt wird.

10. Verfahren nach Anspruch 9, das des Weiteren umfasst:
Senden eines oder mehrerer Bestätigungs (Acknowledgment, ACK)-Frames an die zweite STA in Reaktion auf die erhaltene Rückmeldung; und
Senden eines Abwärtsauswahlhinweises an die zweite STA, wobei der Abwärtsauswahlhinweis eine Notwendigkeit anzeigt, eine Abwärtsauswahl auszuführen.

11. Verfahren nach Anspruch 10, wobei der Abwärtsauswahlhinweis ein Multiple Input Multiple Output (MIMO)-Strahlformungsanforderungshinweis ist.

12. Verfahren nach Anspruch 9, das des Weiteren umfasst, den ersten und den zweiten Satz von Trainingsframes an eine oder mehrere andere STAs zu senden.

13. Verfahren nach Anspruch 9, wobei der abwärtsausgewählte Satz von Sendestrahlen auf der Grundlage von in dem Trainingszeitraum verwendeten Strahlkombinationen oder der einen oder der mehreren in der empfangenen Rückmeldung angegebenen Strahl-IDs bestimmt wird.

14. Verfahren nach Anspruch 9, wobei die erste STA eine Zugangspunkt (Access Point, AP)-STA ist.

15. Verfahren nach Anspruch 9, wobei die eine oder die mehreren Strahl-IDs mit einem oder mehreren durch die zweite STA ausgewählten besten Strahlen verknüpft sind.

## Revendications

1. Première station (STA) comprenant :
un processeur configuré pour :
l'envoi, à une deuxième STA, d'une trame d'annonce d'apprentissage (1102) qui indique une période d'apprentissage et un apprentissage simultané de transmission et de réception ;
l'envoi, à la deuxième STA au cours d'une opportunité de transmission (TXOP) d'apprentissage, d'un premier ensemble de trames d'apprentissage (1110, 1112) par l'intermédiaire d'un premier ensemble de faisceaux de transmission dans un premier créneau de temps de la période d'apprentissage, dans laquelle chacune des trames d'apprentissage comprend un en-tête, un corps MAC, et un ou plusieurs champs d'apprentissage ;
l'envoi, à la deuxième STA au cours de la TXOP d'apprentissage, d'un deuxième ensemble de trames d'apprentissage (1114, 1116) par l'intermédiaire d'un deuxième ensemble de faisceaux de transmission dans un deuxième créneau de temps de la période d'apprentissage ;
la réception, en provenance de la deuxième STA au cours de la TXOP d'apprentissage, d'une rétroaction (1118) associée à un ou plusieurs faisceaux de transmission des premier et deuxième ensembles de faisceaux de transmission, dans laquelle la rétroaction inclut des informations d'état de canal (CSI) et une ou plusieurs identifications (ID) de faisceau ; et
la réalisation d'un apprentissage de sélection vers le bas au cours de la TXOP d'apprentissage, dans laquelle l'apprentissage de sélection vers le bas comprend l'envoi d'un ensemble de trames d'apprentissage de sélection vers le bas (1120, 1122, 1124, 1126) par l'intermédiaire d'un ensemble sélectionné vers le bas de faisceaux de transmission, et
dans laquelle l'ensemble sélectionné vers le bas de faisceaux de transmission est un sous-ensemble du premier ensemble et du deuxième ensemble de faisceaux de transmission et est déterminé sur la base de la rétroaction reçue.

2. Première STA selon la revendication 1, dans laquelle le processeur est en outre configuré pour :
l'envoi d'une ou plusieurs trames d'accusé de réception (ACK), à la deuxième STA, en réponse à la rétroaction reçue ; et
l'envoi d'une indication de sélection vers le bas à la deuxième STA, dans laquelle l'indication de sélection vers le bas indique un besoin de réaliser une sélection vers le bas.

3. Première STA selon la revendication 2, dans laquelle l'indication de sélection vers le bas est incluse dans une trame ACK des une ou plusieurs trames ACK.

4. Première STA selon la revendication 2, dans laquelle l'indication de sélection vers le bas est une indication de demande de formation de faisceau à entrées multiples et sorties multiples (MIMO).

5. Première STA selon la revendication 1, dans laquelle le processeur est en outre configuré pour envoyer les premier et deuxième ensembles de trames d'apprentissage à une ou plusieurs autres STA.

6. Première STA selon la revendication 1, dans laquelle l'ensemble sélectionné vers le bas de faisceaux de transmission est déterminé sur la base d'une ou plusieurs combinaisons de faisceaux utilisées dans la période d'apprentissage ou des une ou plusieurs ID de faisceau indiquées dans la rétroaction reçue.

7. Première STA selon la revendication 1, dans laquelle la première STA est une STA de point d'accès (AP).

8. Première STA selon la revendication 1, dans laquelle les une ou plusieurs ID de faisceau sont associées à un ou plusieurs meilleurs faisceaux sélectionnés par la deuxième STA.

9. Procédé réalisé par une première station (STA), le procédé comprenant :
l'envoi, à une deuxième STA, d'une trame d'annonce d'apprentissage (1102) qui indique une période d'apprentissage et un apprentissage simultané de transmission et de réception ;
l'envoi, à la deuxième STA au cours d'une opportunité de transmission (TXOP) d'apprentissage, d'un premier ensemble de trames d'apprentissage (1110, 1112) par l'intermédiaire d'un premier ensemble de faisceaux de transmission dans un premier créneau de temps de la période d'apprentissage, dans lequel chacune des trames d'apprentissage comprend un en-tête, un corps MAC, et un ou plusieurs champs d'apprentissage ;
l'envoi, à la deuxième STA au cours de la TXOP d'apprentissage, d'un deuxième ensemble de trames d'apprentissage (1114, 1116) par l'intermédiaire d'un deuxième ensemble de faisceaux de transmission dans un deuxième créneau de temps de la période d'apprentissage ;
la réception, en provenance de la deuxième STA au cours de la TXOP d'apprentissage, d'une rétroaction associée à un ou plusieurs faisceaux de transmission des premier et deuxième ensembles de faisceaux de transmission, dans lequel la rétroaction inclut des informations d'état de canal (CSI) et une ou plusieurs identifications (ID) de faisceau ; et
la réalisation d'un apprentissage de sélection vers le bas au cours de la TXOP d'apprentissage, dans lequel l'apprentissage de sélection vers le bas comprend l'envoi d'un ensemble de trames d'apprentissage de sélection vers le bas (1120, 1122, 1124, 1126) par l'intermédiaire d'un ensemble sélectionné vers le bas de faisceaux de transmission,
dans lequel l'ensemble sélectionné vers le bas de faisceaux de transmission est un sous-ensemble du premier ensemble et du deuxième ensemble de faisceaux de transmission et est déterminé sur la base de la rétroaction reçue.

10. Procédé selon la revendication 9, comprenant en outre :
l'envoi d'une ou plusieurs trames d'accusé de réception (ACK), à la deuxième STA, en réponse à la rétroaction reçue ; et
l'envoi d'une indication de sélection vers le bas à la deuxième STA, dans lequel l'indication de sélection vers le bas indique un besoin de réaliser une sélection vers le bas.

11. Procédé selon la revendication 10, dans lequel l'indication de sélection vers le bas est une indication de demande de formation de faisceau à entrées multiples et sorties multiples (MIMO).

12. Procédé selon la revendication 9, comprenant en outre :
l'envoi des premier et deuxième ensembles de trames d'apprentissage à une ou plusieurs autres STA.

13. Procédé selon la revendication 9, dans lequel l'ensemble sélectionné vers le bas de faisceaux de transmission est déterminé sur la base d'une ou plusieurs combinaisons de faisceaux utilisées dans la période d'apprentissage ou des une ou plusieurs ID de faisceau indiquées dans la rétroaction reçue.

14. Procédé selon la revendication 9, dans lequel la première STA est une STA de point d'accès (AP).

15. Procédé selon la revendication 9, dans lequel les une ou plusieurs ID de faisceau sont associées à un ou plusieurs meilleurs faisceaux sélectionnés par la deuxième STA.
